# EUROPEAN PATENT SPECIFICATION

(11) **EP 0 680 540 B1**
(45) Date of publication and mention of the grant of the patent: **30.09.1998**
(21) Application number: 94904702.1
(22) Date of filing: 20.01.1994
(51) Int. Cl.: E04G 1/20, E04G 1/00, E04G 21/28, H02G 1/04

(54) **SCAFFOLDING SYSTEM**
GERÜSTVORRICHTUNG
SYSTEME D'ECHAFAUDAGE

(30) Priority: 20.01.1993 GB 9301068
(43) Date of publication of application: 08.11.1995
(73) Proprietor: PRESSED DRUMS LIMITED, Grantham, Lincolnshire NG31 9RT (GB)
(72) Inventor: HOLT, Edward, Christopher, Grantham Lincolnshire NG31 8HD (GB)
(74) Representative: Loven, Keith James
(86) International application number: GB9400115
(87) International publication number: WO9417263

(56) References cited:
- DE-A- 1 434 492
- DE-A- 2 813 610
- DE-C- 906 990
- NL-A- 8 801 272
- US-A- 3 378 101
- US-A- 4 000 789
- US-A- 4 583 331

## Description

### Field of the Invention

This invention relates to a scaffolding system suitable for use, for example, in providing protective cover for road crossings of overhead power lines during cabling thereof.

### Background to the Invention

Conventionally, when an overhead power line is being cabled at a point where it crosses a road or railway, it is necessary to protect the road or railway by means of a net suspended beneath the course of the power line. Where the road is only narrow, horizontal poles are simply located on each side of the road and the net is omitted, any trailing cable being carried by the poles over the road. The poles and/or nets are mounted on scaffolding structures erected especially for the job.

The erection and dismantling of scaffolding is a skilled job, and the use of scaffolding is therefore relatively costly. Further, in order to ensure that the scaffolding is in position when the cabling is to be carried out, it is often necessary to have it erected some time in advance of when it is needed, according to availability of skilled scaffolders. For the same reason, the scaffolding may remain in position for some time after the cabling job has been completed. This can increase the cost further.

In other uses of scaffolding, for example in general building and maintenance, similar considerations apply, with the cost and timing of scaffolding being an important factor in the overall cost. For example, as building work advances upwardly, it is necessary to call the scaffolders back to adjust the scaffolding at intervals before work can continue, and the adjustments are generally in fairly large steps, so that initially brick-layers, for example, are obliged to work lower down than might be ideal, while before the next adjustment they can be reaching up higher than is convenient or comfortable.
DE 906990A provides a scaffolding system comprising a pair of towers, pivotally mounted on bogeys, the bogeys being movable along tracks, adjustment means being provided so as to maintain the towers vertical. The pair of towers is connected by a cross member.
The object of the invention is to provide a simple scaffolding system which can be moved easily from one site to another, and erected without requiring skilled scaffolders.

### Summary of the Invention

The present invention provides a scaffolding system comprising a spaced pair of columns, each column being mounted on a transportable base so as to be pivotable relative thereto, and connecting means attachable to each of the columns in the pair when generally vertical to extend therebetween, characterized in that each column is pivotable relative to the base between a generally horizontal orientation and a generally vertical orientation, and the system further comprising locking means to hold each column in its generally vertical orientation, and anchorage means to anchor each column to the ground when each column is in its generally vertical orientation and during movement of each column between a generally horizontal and a generally vertical orientation.

Guy ropes or stays may be used to stabilise the columns, especially when their length is greater, for example over two metres. The guy ropes or stays may extend to ground anchorage points such as stakes, anchor frames or heavy weights such as concrete blocks. The anchorage means may be the transportable base.

The bases may carry an upright permitting the column to be raised and lowered in a falling derrick arrangement, with a lifting cable passing over the upright to attach to the column at a point intermediate its ends. The cable may be pulled by means of a hand winch or tensioner device. Alternatively, the columns may be lifted to their upright positions with the aid of a tractor or like vehicle.

The columns are suitably formed from a lattice work, for example with a triangular section. The lattice section minimises the effect of wind on the columns while ensuring high strength and rigidity. The columns can be constructed from any suitable material with the required strength/weight characteristics and rigidity; galvanised steel and aluminium being particularly suitable. A column constructed wholly or substantially of aluminium, in particular, is especially easily transportable and manoeuvrable in use and so lends itself advantageously to the principle working conditions for which the invention was designed.

For supporting netting for protecting roads during overhead cabling operations, the connecting means may comprise a simple beam or pole, but in a preferred embodiment a further lattice section is hinged down from one column to attach to the other column. In another embodiment, a reel of netting forms the connecting means between adjacent columns, the reel being installed before the columns are brought to their vertical position. The netting can then be unreeled across the road to the pair of columns on the other side. This substantially simplifies the installation of the netting, and reduces the risk of damage to the netting during installation, since in conventional operations it is usually necessary to drag the netting across the ground.

In a preferred embodiment, the connecting means is a working platform, for example of the general type disclosed in our European Patent Application No 0 547 792 A1. The platform may then be used for working, in conventional manner, or it may even provide a temporary bridge, for example permitting workers to cross a motorway or other busy road safely, to permit working on both sides without interrupting the flow of traffic.

In another embodiment, each column is provided with a track therealong engageable with guide means on the ends of a working platform, and lifting chains or cables whereby the platform may be hoisted up between the columns to, and held at, any desired working height. Thus, one disadvantage of conventional scaffolding, that of its being alterable in working height only in steps, is overcome.

### Brief Description of the Drawings

In the drawings, which illustrate alternative embodiments of the invention:
Figure 1 is a side elevation of a column forming part of a system according to one embodiment;
Figure 2 is a view of the same column before being elevated to its working orientation, and with lifting means present;
Figure 3 is a top plan view of the column shown in Figure 1;
Figure 4 is a perspective view of a scaffolding system in use to protect a road during overhead power line cabling;
Figure 5 is a diagrammatic elevation of a scaffolding system according to another embodiment usable to provide a variable height working station; and
Figure 6 is a diagrammatic elevation of another embodiment of the scaffolding system in use as a temporary overhead road crossing.

### Detailed Description of the Illustrated Embodiments

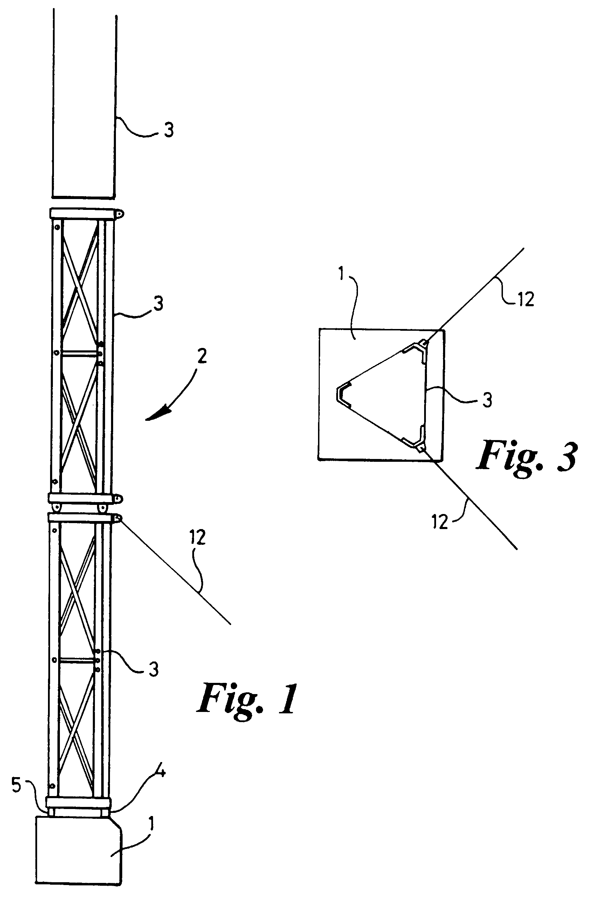

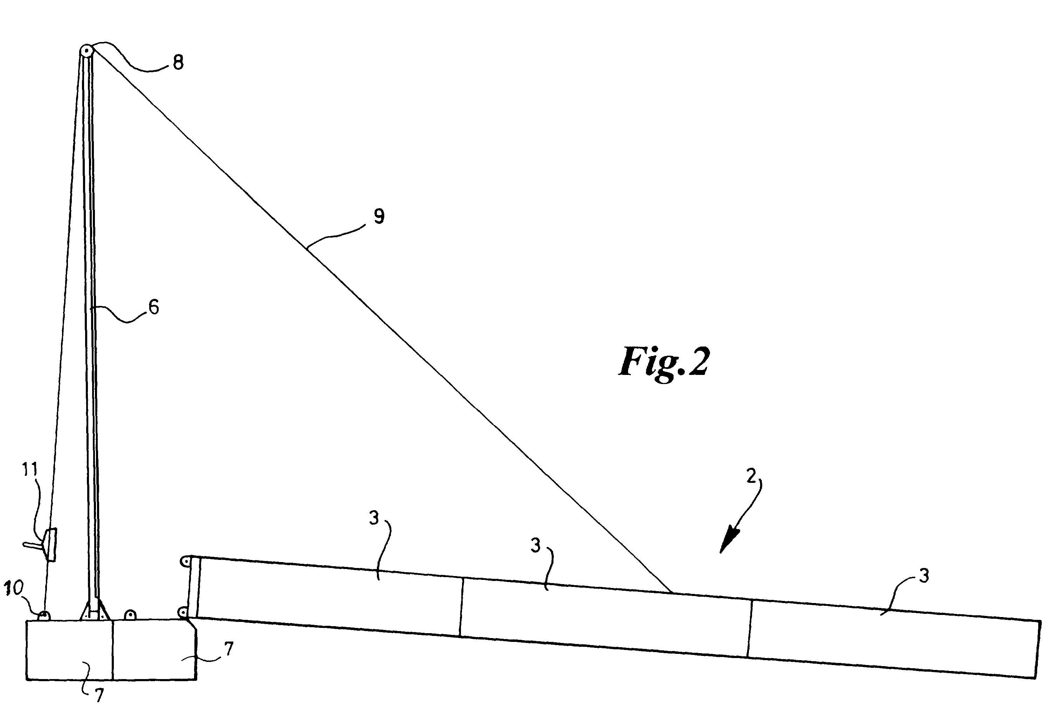

The basic unit of the scaffolding system of the invention is shown in Figure 1 and consists of an anchor block 1, for example a concrete block, having pivotally mounted thereon a column 2 consisting of a plurality of triangular open lattice units 3 secured together to provide the desired height. For example, each unit may be of 2m in length. The pivotal mounting of the column is at two points 4 of the triangle, with the third point 5 provided with a removable locking bolt so that the column may be transported with the block 1 in the horizontal configuration illustrated in Figure 2.

The anchor block 1 can take various forms so long as it serves to stabilze the base of column 2 in a fixed position. An alternative to a concrete block is a heavy gauge metal plate (not illustrated) optionally with a spike or spear on the bottom to penetrate the soft ground. The plate can be further fixed by driving anchor pins through pre-drilled holes in the plate into the surface beneath. In certain conditions such additional anchorages may well be necessary.

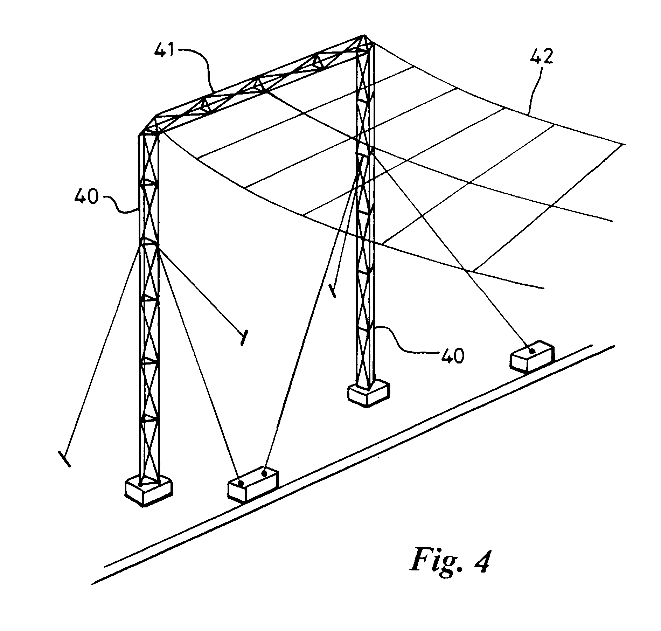

To elevate the transported column to its vertical position, after positioning of the block at the desired location, a towing motor vehicle may be used to pull the column upright, or a derrick arrangement may be used as illustrated in Figure 2, with a pole 6 mounted on a separate block 7 and having a pulley 8 at its uppermost end over which a rope 9 passes from an anchor point 10 on the block 7 to a point on the column. A simple lever-operated pulling or tensioning device 11 may then be used to pull the column upright. When the column is in position, it may be stabilised by guy ropes 12, as shown in Figures 1 and 3, extending to stakes driven into the ground, to additional concrete blocks, or to anchor frames having legs engageable in soft ground.

In the embodiment of Figure 4, a pair of columns 40 is located on each side of the road to be crossed by the power line. (For the sake of clarity, the columns on only one side of the road are shown.) One of the columns has an upper lattice section 41 pivotally connected thereto, locked in position during lifting, but then released and lowered so that its free end comes to rest on the upper end of the other column, where it is secured by clips or other suitable securing means. A safety net 42 is then suspended between the pairs of columns over the road. This may be done in the conventional manner by simply laying out the net on the ground and then hauling it into position.

Alternatively, the net may be fitted in the form of a reel to the pair of columns before they are raised to their upright position, the net being unreeled across the road to the other pair of columns when the columns have been raised and secured.

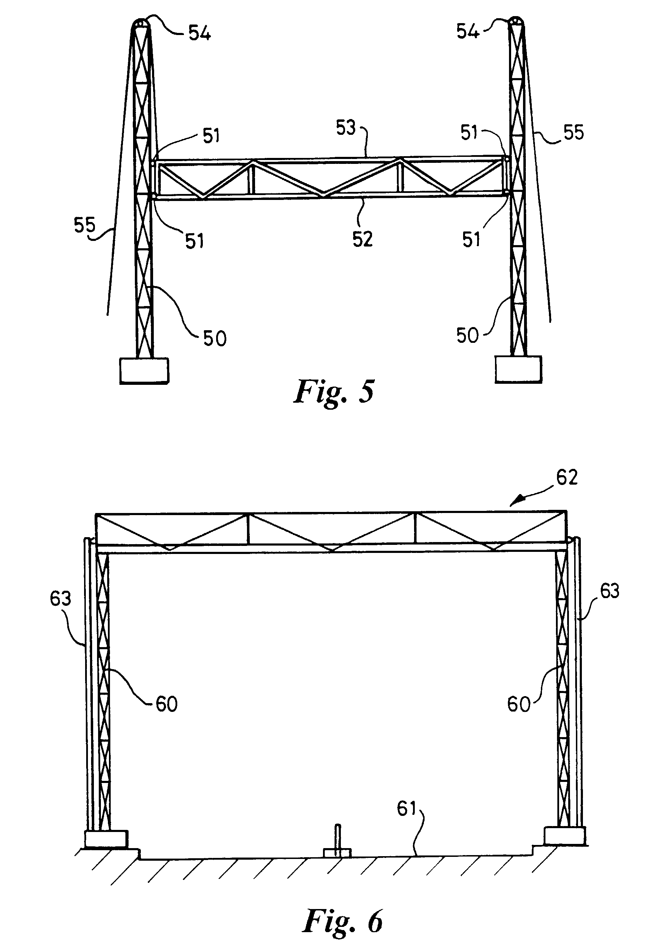

Figure 5 shows a configuration suitable for use as a replacement for conventional scaffolding in house-building and maintenance work, for example. Each column 50 is provided along one face with a track or tracks engageable by runners or wheels 51 provided on the ends of a working platform 52 having a safety rail 53 along at least the side thereof away from the surface of the building being worked on. A pulley 54 is mounted at the top of each column, and a cable 55 passes over the pulley and is attached to the platform 52. Suitable winching means (not shown) are provided for the cables 55 to permit the platform to be raised and lowered along the columns, and to be secured at any desired elevation. Thus, any working height of the platform may be selected easily and varied continuously rather than in fixed, and rather large, increments as in conventional scaffolding.

Where work is being carried out against a building it is necessary to anchor the columns to the building itself. This can be achieved by a wide variety of conventional means well known in this field of engineering and which can be chosen by the intended skilled addressee of this description. In themselves such measures are generally self-evident. However, the lattice-style column construction, especially when combined with the essentially triangular column cross-section, and still more so when the column is constructed wholly or substantially of aluminium, makes the system particularly readily adaptable to building-anchorage whilst retaining all its inherent advantages of lightweight yet rigid construction.

It is frequently necessary for repairs to be carried out on busy roads without closing them to traffic. High speed roads such as motorways are unsafe for pedestrians to cross, and this can make it difficult for road workers to move between working sites on opposite sides of the road. The embodiment illustrated in Figure 6 overcomes this difficulty by providing a temporary walkway over the road. A single column 60 is erected on each side of the road 61 and stabilised by guy ropes (not shown) as hereinbefore described. A walkway 62 of essentially the same construction as the suspended platforms disclosed in our European Patent Application No 0 547 792 A1 is then secured to each of the columns, and ladders 63 are fixed to each column to permit access to be gained to the walkway. While it may be possible to lift the walkway into place using a crane after the columns have been erected, an alternative approach, where the road can be temporarily closed, would be to fix to walkway to the ends of the columns while they are still lying generally horizontally, and then lifting the whole structure upright before securing the columns.

It will be appreciated that there will be other situations than just roads where the use of a high level temporary walkway will be advantageous. For example, railways, rivers and canals may also require the provision of temporary crossings.

## Claims

1. A scaffolding system comprising a spaced pair of columns (2,40,50,60), each column being mounted on a transportable base (1) so as to be pivotable relative thereto, and connecting means (41,52,62) attachable to each of the columns in the pair when generally vertical to extend therebetween, characterized in that each column (2,40,50,60) is pivotable relative to the base between a generally horizontal orientation and a generally vertical orientation, and the system further comprising locking means (5) to hold each column in its generally vertical orientation, and anchorage means to anchor each column to the ground when each column is in its generally vertical orientation and during movement of each column between a generally horizontal and a generally vertical orientation.

2. A scaffolding system according to claim 1, wherein the anchorage means is the transportable base.

3. A scaffolding system according to claim 1 or 2, wherein the anchorage means further comprise guy ropes (12), stays or other means to stabilize one or more columns (2,40,50,60) in the generally vertical orientation.

4. A scaffolding system according to any of claims 1 to 3, comprising an upright (6) mounted on a base (7) and adapted for raising and lowering one of the columns (2) in a falling derrick type arrangement.

5. A scaffolding system according to any preceding claim, wherein the columns (2,40,50,60) are constructed wholly or substantially of aluminium or an aluminium alloy.

6. A scaffolding system according to any preceding claim, wherein the connecting means (41,52,62) comprises a pole or beam.

7. A scaffolding system according to any of claims 1 to 5, wherein the connecting means (41,52,62) comprises a further column section pivotally connected to one of the columns (2,40,50,60) such that the further section may be lowered from a substantially vertical orientation into a substantially horizontal orientation and releasably secured to the other column (2,40,50,60).

8. A scaffolding system according to any of claims 1 to 5, wherein the connecting means comprises a reel of netting.

9. A scaffolding system according to any of claims 1 to 5, wherein the connecting means comprises a working platform (52).

10. A scaffolding system according to any preceding claim, wherein at least one column is provided with a track, engageable with a guide means (51) on the end of the said connecting means, and lifting means (54.55) whereby the connecting means can be raised and lowered between the columns and held at any desired working height.

## Patentansprüche

1. Gerüstvorrichtung, die ein beabstandetes Paar von Säulen (2, 40, 50, 60) und Verbindungsmittel (41, 52, 62) aufweist, wobei jede Säule auf einer transportablen Basis (1) so angebracht ist, daß sie relativ zu dieser schwenkbar ist, und die Verbindungsmittel an jeder Säule des Säulenpaars befestigt werden können, wenn diese im allgemeinen vertikal sind, um sich zwischen diesen zu erstrecken, dadurch gekennzeichnet, daß jede Säule (2, 40, 50, 60) relativ zu der Basis von einer im allgemeinen horizontalen Ausrichtung zu einer im allgemein vertikalen Ausrichtung schwenkbar ist, und die Vorrichtung außerdem Verriegelungsmittel (5), um jede Säule in ihrer im allgemeinen vertikalen Ausrichtung zu halten, und Verankerungsmittel aufweist, um jede Säule in dem Boden zu verankern, wenn jede Säule sich in ihrer im allgemeinen vertikalen Ausrichtung befindet und während einer Bewegung jeder Säule von einer im allgemeinen horizontalen zu einer im allgemeinen vertikalen Ausrichtung.

2. Gerüstvorrichtung nach Anspruch 1, bei der die Verankerungsmittel die transportable Basis sind.

3. Gerüstvorrichtung nach Anspruch 1 oder 2, bei der die Verankerungsmittel außerdem Verankerungsseile (12) und Streben oder andere Mittel aufweisen, um eine oder mehrere Säulen (2, 40, 50, 60) in der im allgemeinen vertikalen Ausrichtung zu stabilisieren.

4. Gerüstvorrichtung nach irgendeinem der Ansprüche 1 bis 3, die einen Säulenständer (6) aufweist, der auf einer Basis (7) angebracht ist und zum Hochheben und Herablassen einer der Säulen (2) wie ein senkbarer Kranausleger geeignet ist.

5. Gerüstvorrichtung nach irgendeinem der vorhergehenden Ansprüche, bei der die Säulen (2, 40, 50, 60) ganz oder im wesentlichen aus Aluminium oder einer Aluminiumlegierung gebaut sind.

6. Gerüstvorrichtung nach irgendeinem der vorhergehenden Ansprüche, bei der die Verbindungsmittel (41, 52, 62) eine Stange oder einen Träger aufweisen.

7. Gerüstvorrichtung nach irgendeinem der Ansprüche 1 bis 5, bei der die Verbindungsmittel (41, 52, 62) einen weiteren Säulenabschnitt aufweisen, der mit einer der Säulen (2, 40, 50, 60) schwenkbar verbunden ist, so daß der weitere Abschnitt aus einer im wesentlichen vertikalen Ausrichtung in eine im wesentlichen horizontale Ausrichtung herabgesenkt und lösbar an der anderen Säule (2, 40, 50, 60) befestigt werden kann.

8. Gerüstvorrichtung nach irgendeinem der Ansprüche 1 bis 5, bei der die Verbindungsmittel eine Rolle aus Netzwerk aufweisen.

9. Gerüstvorrichtung nach irgendeinem der Ansprüche 1 bis 5, bei der die Verbindungsmittel eine Arbeitsplattform (52) aufweisen.

10. Gerüstvorrichtung nach irgendeinem der vorhergehenden Ansprüche, bei der wenigstens eine Säule mit einer Schiene versehen ist, in die Führungsmittel (51) an einem Ende der Verbindungsmittel eingreifen, und Zugmittel (54, 55) aufweist, durch die dle Verbindungsmittel zwischen den Säulen hochgehoben und gesenkt und in irgendeiner gewünschten Arbeitshöhe gehalten werden können.

## Revendications

1. Système d'échafaudage comprenant une paire de colonnes espacées (2,40, 50, 60), chaque colonne étant montée sur une base transportable (1) de façon à pouvoir être amenée à pivoter par rapport à celle-ci, et un moyen de connexion (41, 52, 62) pouvant être fixé à chacune des colonnes de la paire lorsqu'elles sont généralement verticales pour s'étendre entre les deux, caractérisé par le fait que chaque colonne (2, 40, 50, 60) est monté à pivotement par rapport à la base entre une orientation généralement horizontale et une orientation généralement verticale, et que le système comprend en outre des moyens de verrouillage (5) pour maintenir chaque colonne dans son orientation généralement verticale, et des moyens d'ancrage pour ancrer chaque colonne au sol lorsque chaque colonne est dans son orientation généralement verticale et pendant le mouvement de chaque colonne entre une orientation généralement horizontale et une orientation généralement verticale.

2. Système d'échafaudage selon la revendication 1, dans lequel le moyen d'ancrage est la base transportable.

3. Système d'échafaudage selon l'une des revendications 1 ou 2, dans lequel les moyens d'ancrage comprennent en outre des câbles d'ancrage (12), des haubans ou autres moyens pour stabiliser une ou plusieurs colonnes (2, 40, 50, 60) dans l'orientation généralement verticale.

4. Système d'échafaudage selon l'une quelconque des revendications 1 à 3, comprenant un montant (6) monté sur une base (7) et adapté pour soulever et abaisser l'une des colonnes (2) dans un dispositif de type derrick tombant.

5. Système d'échafaudage selon l'une quelconque des revendications précédentes, dans lequel les colonnes (2, 40, 50, 60) sont construites entièrement ou essentiellement en aluminium ou en un alliage d'aluminium.

6. Système d'échafaudage selon l'une quelconque des revendications précédentes, dans lequel le moyen de connexion (41, 52, 62) comprend une tige ou poutre.

7. Système d'échafaudage selon l'une quelconque des revendications 1 à 5, dans lequel le moyen de connexion (41, 52, 62) comprend une nouvelle section de colonne connectée de façon pivotante à l'une des colonnes (2, 40, 50, 60) de telle sorte que la nouvelle section puisse être abaissée d'une orientation sensiblement verticale dans une orientation sensiblement horizontale et fixée de façon amovible à l'autre colonne (2, 40, 50, 60).

8. Système d'échafaudage selon l'une quelconque des revendications 1 à 5, dans lequel le moyen de connexion comprend un dévidoir de grillage.

9. Système d'échafaudage selon l'une quelconque des revendications 1 à 5, dans lequel le moyen de connexion comprend une plateforme de travail (52).

10. Système d'échafaudage selon l'une quelconque des revendications précédentes, dans lequel au moins une colonne est dotée d'une glissière, susceptible d'être engagée par un moyen de guidage (51) sur l'extrémité dudit moyen de connexion, et un moyen de soulèvement (54, 55), ce par quoi le moyen de connexion peut être soulevé et abaissé entre les colonnes et maintenu à n'importe quelle hauteur de travail désirée.
